Europäisches Patentamt

**European Patent Office**

Office européen des brevets

(19)

(11) Veröffentlichungsnummer: **0 023 558**
**B1**

(12) **EUROPÄISCHE PATENTSCHRIFT**

(45) Veröffentlichungstag der Patentschrift:
27.07.83

(21) Anmeldenummer: **80103404.2**

(22) Anmeldetag: **18.06.80**

(51) Int. Cl.³: **H 04 Q 11/04, H 04 L 5/14**

(54) Verfahren zur vierdrahtmässigen Übertragung von digitalen Nachrichtensignalen auf einer Zweidrahtübertragungsleitung.

(30) Priorität: **05.07.79 DE 2927228**

(43) Veröffentlichungstag der Anmeldung:
**11.02.81 Patentblatt 81/6**

(45) Bekanntmachung des Hinweises auf die Patenterteilung:
**27.07.83 Patentblatt 83/30**

(84) Benannte Vertragsstaaten:
**FR GB SE**

(56) Entgegenhaltungen:
**AT-B-345 352**
**DE-A-2 346 984**
**DE-A-2 362 855**
**DE-A-2 619 333**

(73) Patentinhaber: **SIEMENS AKTIENGESELLSCHAFT, Berlin und München Wittelsbacherplatz 2, D-8000 München 2 (DE)**

(72) Erfinder: **Hirschmann, Peter, Dipl.-Ing., Münchner Strasse 24, D-8031 Puchheim (DE)**

## Verfahren zur vierdrahtmäßigen Übertragung von digitalen Nachrichtensignalen auf einer Zweidrahtübertragungsleitung

Die Erfindung betrifft ein Verfahren zur vierdrahtmäßigen Übertragung von digitalen Nachrichtensignalen zwischen einer übergeordneten Einrichtung, insbesondere einer digitalen Vermittlungsstelle und einer untergeordneten Einrichtung, insbesondere einer digitalen Teilnehmerstation auf einer Zweidrahtübertragungsleitung in Form von Nachrichtensignalblöcken, die wenigstens ein Nachrichtensignalwort, der Signalisierung dienende Bits und in der Übertragungsrichtung von der übergeordneten Einrichtung zur untergeordneten Einrichtung der Synchronisierung dienende Bits umfassen und die von der untergeordneten Einrichtung aus jeweils nach Empfang der von der übergeordneten Einrichtung her ankommenden Nachrichtensignalblöcke, gegebenenfalls unter Einhaltung einer Sendepause ausgesendet werden.

Wegen der erwähnten vierdrahtmäßigen Ausnutzung der Zweidrahtleitung, d. h. also der zeitlich nacheinander erfolgenden Übertragung in den beiden Übertragungsrichtungen ist die Reichweite eines solchen Übertragungsverfahrens außer durch die Kabeldämpfung der Übertragungsleitung auch durch die Laufzeit der Nachrichtensignalblöcke begrenzt.

Sofern es sich bei den untergeordneten Einrichtungen um digitale Teilnehmerstationen und bei den übergeordneten Einrichtungen um digitale Vermittlungsstellen handelt, ist mit Teilnehmerleitungsanschlußlängen bis zu 10 km zu rechnen. Je nach Übertragungsfrequenz und Art der Codedarstellung liegen die bisher erzielbaren Reichweiten jedoch lediglich in der Größenordnung von 5 km bis 6 km.

Im Interesse einer möglichst verzerrungsarmen Übertragung, die es gestattet, auf den Einsatz von Entzerrern zu verzichten, wird dabei auf der zweidrähtigen Übertragungsstrecke, die in diesem Falle ja nur für den Verkehr zwischen zwei Einrichtungen dient, mit einer höheren Übertragungsfrequenz gearbeitet, als auf den Zeitmultiplexübertragungsleitungen, die die übergeordnete Einrichtung, d. h. also die digitale Vermittlungsstelle mit anderen gleichrangigen Einrichtungen verbinden. Da wie angegeben, die Kabeldämpfung in solchen Anwendungsfällen nicht die einzige Reichweitengrenze darstellt, ist dort bisher auf den Einsatz von Regeneratoren verzichtet worden.

Im Zusammenhang mit der Übertragung von digitalen Signalen zwischen gleichberechtigten Sende- bzw. Empfangsstationen auf Zeitmultiplexübertragungsleitungen, die größere Entfernungen überbrücken, und in die dementsprechend mehrere Regeneratoren eingeschaltet sind, (DE-A-2 362 855) ist es bekannt, die digitalen Signale in Signalabschnitten zu übertragen, die zeitlich um einen Faktor größer als zwei gegenüber der ursprünglichen Rahmenlänge komprimiert sind. Diese komprimierten Signale der beiden Übertragungsrichtungen werden dabei derart über die gleichen Adern der Übertragungsleitung gesandt, daß die Signalabschnitte unterschiedlicher Übertragungsrichtung gleichzeitig über unterschiedliche Übertragungsabschnitte laufen und in den Empfängerseiten der Regeneratoren in getrennte Speicher übernommen werden und daß die Signalabschnitte schließlich durch Umschalten der Speicher auf die jeweiligen Sendeseiten der Regeneratoren getrennt weitergegeben werden. Die Kompressionen der digitalen Signale hat allerdings, wie sich aus den obigen Ausführungen ergibt, verstärkte Signalverzerrungen zur Folge.

Aufgabe der vorliegenden Erfindung ist es daher, ein Übertragungsverfahren der eingangs genannten Art anzugeben, mit dem sich bei weitgehender Verzerrungsfreiheit Reichweiten bis in die Größenordnung der erwähnten maximalen Längen von Teilnehmeranschlußleitungen erzielen lassen.

Erfindungsgemäß wird diese Aufgabe dadurch gelöst, daß die Nachrichtensignalblöcke einen Regenerator durchlaufen, der an einer Stelle in die Zweidrahtleitung eingefügt ist, an der die von der untergeordneten Einrichtung herkommenden Nachrichtensignalblöcke spätestens am Ende der Laufzeit der von der übergeordneten Einrichtung gesendeten Nachrichtensignalblöcke bis zu dieser Stelle nach dem in derjenigen Übertragungsperiode liegenden Sendebeginn bei der übergeordneten Einrichtung angekommen sind, die auf die Übertragungsperiode folgt, in der der jeweilige Sendebeginn bei der untergeordneten Einrichtung liegt, daß die von der untergeordneten Einrichtung kommenden Nachrichtensignalblöcke im Regenerator vor ihrer Weitergabe zur übergeordneten Einrichtung hin solange verzögert werden, bis hier die Weitersendung eines von der übergeordneten Einrichtung herkommenden Nachrichtensignalblocks beendet ist, jedoch nur solange, daß sie vor Sendebeginn bei der übergeordneten Einrichtung dort ankommen.

Aufgrund der erfindungsgemäßen Maßnahmen läßt sich bis zu wesentlich größeren Leitungslängen als bisher vermeiden, daß wegen der Laufzeiten Nachrichtensignalblöcke der beiden Übertragungsrichtungen auf der Zweidrahtübertragungsleitung zeitlich ganz oder teilweise zusammenfallen. Bei Nachrichtensignalblöcken von 20 Bit, die sich aus zwei Nachrichtensignalworten von jeweils 8 Bit, zwei Signalisierbit und zwei Synchronisierbit zusammensetzen, einer Übertragungsfrequenz von 0,256 MHz und einer Laufzeit von 6,7 μsec/km ergibt sich, wie eine Rechnung zeigt, eine erzielbare Reichweite von 8,5 km. Bei Nachrichtensignalblöcken von 38 Bit bei einer Übertragungsfrequenz von 0,204 MHz und derselben Laufzeit liegt die erzielbare Reichweite sogar bei 12,3 km.

Wenn die Dämpfungsverhältnisse es erfordern, wird gemäß weiterer Ausgestaltung der Erfindung im erwähnten Regenerator außerdem eine amplitudenmäßige Regeneration der Bits der Nachrichtensignalblöcke beider Übertragungsrichtungen vorgenommen.

Gemäß noch einer anderen Ausgestaltung der Erfindung werden als Bestandteile des Regenerators Baueinheiten verwendet, wie sie auch an den Übergangsstellen zwischen der Zweidrahtübertragungsleitung und der untergeordneten Einrichtung bzw. der übergeordneten Einrichtung eingesetzt sind. Es handelt sich hierbei um Zeitweichen, die im Regenerator der Trennung und Wiedervereinigung der Nachrichtensignalblöcke der beiden Übertragungsrichtungen vor und nach ihrer unterschiedlichen Behandlung bei der Weitergabe dienen bzw. um Sende-Empfangseinrichtungen, mit deren Hilfe die erwähnte amplitudenmäßige Regeneration vorgenommen wird.

Nachstehend wird die Erfindung anhand von zwei Figuren näher erläutert.

Die Fig. 1 zeigt das Blockschaltbild eines zur Durchführung des erfindungsgemäßen Verfahrens erforderlichen Regenerators,

die Fig. 2 zeigt ein zugehöriges Zeitdiagramm.

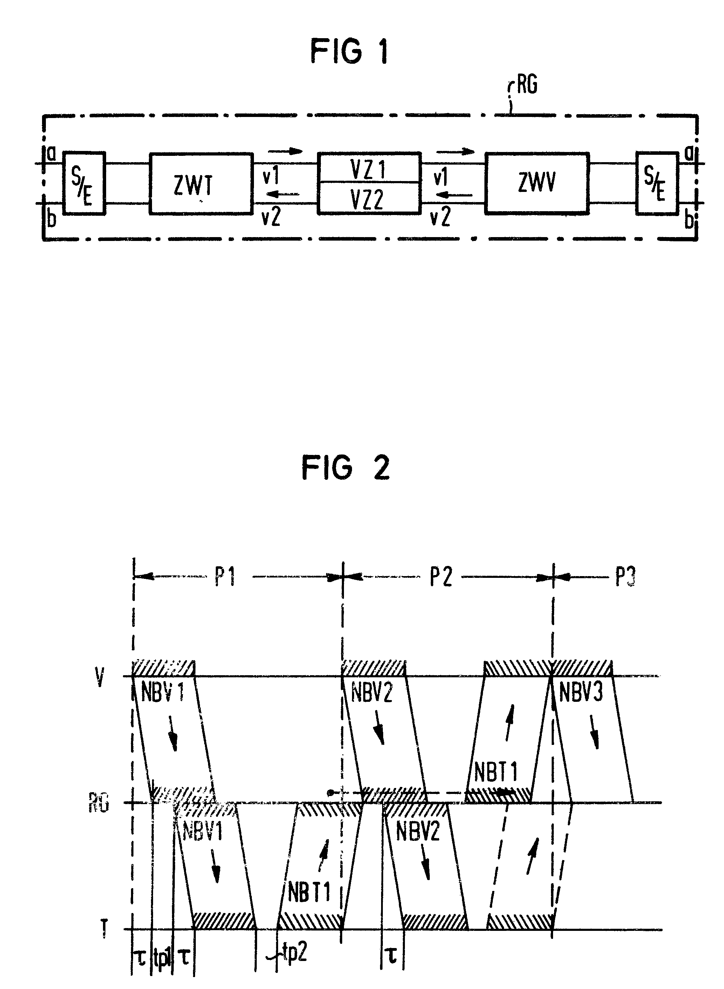

Wie die Fig. 1 zeigt, ist der erfindungsgemäß vorgesehene Regenerator in eine Zweidrahtübertragungsleitung mit den Leitungsadern a und b eingefügt, die beispielsweise eine an der linken Seite zu denkende digitale Teilnehmerstation als untergeordnete Einrichtung mit einer auf der rechten Seite liegend zu denkenden digitalen Vermittlungsstelle als übergeordnete Einrichtung verbindet.

Auf der erwähnten Zweidrahtübertragungsleitung werden Nachrichtensignalblöcke übertragen, die wenigstens ein Nachrichtensignalwort, der Signalisierung dienende Bits und in der Übertragungsrichtung von der digitalen Vermittlungsstelle zur digitalen Teilnehmerstation der Synchronisierung dienende Bits umfassen. Die Übertragung erfolgt hierbei vierdrahtmäßig, d. h. die Nachrichtensignalblöcke der beiden Übertragungsrichtungen treten jeweils nacheinander auf der Übertragungsleitung auf.

Sofern es die Dämpfungsverhältnisse auf der Zweidrahtübertragungsleitung erfordern, ist der Regenerator, wie in Fig. 1 dargestellt, sowohl auf der Teilnehmerseite als auch auf der Vermittlungsseite mit einer Sende-Empfangseinrichtung S/E abgeschlossen, in der eine amplitudenmäßige Regeneration der Bits der Nachrichtensignalblöcke beider Übertragungsrichtungen erfolgt.

Der Regenerator RG enthält ferner im Anschluß an diese Sende-/Empfangseinrichtungen sowohl auf der Teilnehmerseite als auch auf der Vermittlungsseite eine Zeitweiche ZWT bzw. ZWV. Diese Zeitweichen dienen dazu, die bis dahin nur zeitlich getrennten Nachrichtensignalblöcke der beiden Übertragungsrichtungen auch räumlich auf getrennte Vierdrahtleitungszweige v1 bzw. v2 zu verteilen bzw. sie zur Teilnehmeranschlußleitung hin wieder zeitlich zu verschachteln.

Der Vierdrahtleitungszweig v1, über den die von der digitalen Teilnehmerstation kommenden Nachrichtensignalblöcke geleitet werden, führt über ein Verzögerungsglied VZ1, der Vierdrahtleitungszweig v2, über den die von der digitalen Vermittlungsstelle her kommenden Nachrichtensignalblöcke geleitet werden, führt über ein Verzögerungsglied VZ2, dessen Verzögerungszeit jedoch unter Umständen vernachlässigbar klein sein kann und mit dem Prinzip des erfindungsgemäßen Verfahrens nichts zu tun hat.

In der Fig. 2 sind die Sende- und Empfangszeitspannen von Nachrichtensignalblöcken sowohl bei der digitalen Vermittlungsstelle als auch bei der digitalen Teilnehmerstation als auch beim erfindungsgemäß eingesetzten Regenerator dargestellt. Man erkennt aus dieser Darstellung, daß ein Nachrichtensignalblock NBV1, der von der digitalen Vermittlungsstelle ausgeht, nach einer Laufzeit $\tau$ beim Regenerator RG eintrifft. Nach einer kleinen Pause tp1, die durch die beschränkte Arbeitsgeschwindigkeit der Zeitweiche ZMV bedingt ist, wird dieser Nachrichtensignalblock weiter gesendet und gelangt, unter der Voraussetzung, daß der Regenerator RG in der Mitte der Zweidrahtübertragungsleitung eingefügt ist, ebenfalls nach einer Laufzeit $\tau$ bei der digitalen Teilnehmerstation an.

Die digitale Teilnehmerstation beginnt, wie ebenfalls die Fig. 2 zeigt, mit der Aussendung eines Nachrichtensignalblockes NBT1 dann, wenn der gesamte von der digitalen Vermittlungsstelle kommende Nachrichtensignalblock NBV1 von ihr empfangen worden ist, wobei eine kleine Pause tp2 eingehalten ist, die der Echosignalunterdrückung dient.

Der Nachrichtensignalblock NBT1 hat, wie die Fig. 2 zeigt, den Regenerator RG erreicht, bevor dort der in der zweiten betrachteten Übertragungsperiode P2 von der digitalen Vermittlungsstelle ausgesendete Nachrichtensignalblock NBV2 eingetroffen ist. Die letztgenannte Bedingung wird dadurch eingehalten, daß sowohl die Gesamtlänge der Zweidrahtübertragungsleitung als auch der zwischen der digitalen Teilnehmerstation und dem Regenerator RG liegende Abschnitt eine bestimmte Länge nicht überschreitet. Wie schon angedeutet, muß der letzterwähnte Streckenabschnitt jedoch nicht unbedingt die halbe Gesamtleitungslänge haben.

Die Fig. 2 zeigt ferner, daß eine unmittelbare Weiterübertragung des Nachrichtensignalblokkes NBT1 vom Regenerator RG aus zur digitalen Vermittlungsstelle zu einer zeitlichen Überlappung mit dem in der nächsten betrachteten Übertragungsperiode von der Vermittlungsstelle ausgehenden Nachrichtensignalblock NBV2 zur Folge hätte. Die Weitergabe des Nachrichten-signalblockes NBT1 erfolgt daher erfindungsge-

mäß nach einer längeren Verzögerungszeit, die wenigstens so groß sein muß, daß keine zeitliche Überlappung mit der Empfangszeitspanne und mit der Sendezeitspanne für den Nachrichtensignalblock NBV2 beim Regenerator RG zustande kommt. Sie darf andererseits nicht so groß sein, daß bei der digitalen Vermittlungsstelle eine zeitliche Überlappung des Empfangs des Nachrichtensignalblockes NBT1 mit der Aussendung des nächsten von dort ausgehenden Nachrichtensignalblockes NBV3 zustande kommt. Unter Berücksichtigung der Laufzeit darf hier also, da die Sendezeitspanne für den Nachrichtensignalblock NBV3 mit dem Anfang der dritten betrachteten Übertragungsperiode P3 zusammenfällt, die Empfangszeitspanne für den Nachrichtensignalblock NBT1 sich nicht bis in diese dritte Übertragungsperiode P3 hinein erstrecken.

Die mit Hilfe des erfindungsgemäßen Verfahrens erzielbaren Reichweiten decken praktisch alle Leitungslängen ab, die im Zusammenhang mit der Verbindung von digitalen Teilnehmerstationen und digitalen Vermittlungsstellen über Zweidrahtteilnehmeranschlußleitungen vorkommen.

**Patentansprüche**

1. Verfahren zur vierdrahtmäßigen Übertragung von digitalen Nachrichtensignalen zwischen einer übergeordneten Einrichtung, insbesondere einer digitalen Vermittlungsstelle, und einer untergeordneten Einrichtung, insbesondere einer digitalen Teilnehmerstation auf einer Zweidrahtübertragungsleitung in Form von Nachrichtensignalblöcken, die wenigstens ein Nachrichtensignalwort, der Signalisierung dienende Bits und in der Übertragungsrichtung von der übergeordneten Einrichtung zur untergeordneten Einrichtung der Synchronisierung dienende Bits umfassen und die von der untergeordneten Einrichtung aus jeweils nach Empfang der von der übergeordneten Einrichtung her ankommenden Nachrichtensignalblöcke, gegebenenfalls unter Einhaltung einer Sendepause ausgesendet werden, dadurch gekennzeichnet, daß die Nachrichtensignalblöcke einen Regenerator (RG) durchlaufen, der an einer Stelle in die Zweidrahtleitung (a, b) eingefügt ist, an der die von der untergeordneten Einrichtung herkommenden Nachrichtensignalblöcke (NBT) spätestens am Ende der Laufzeit ($\tau$) der von der übergeordneten Einrichtung gesendeten Nachrichtensignalblöcke (NBV) bis zu dieser Stelle nach dem in derjenigen Übertragungsperiode (z. B. P2) liegenden Sendebeginn bei der übergeordneten Einrichtung angekommen sind, die auf die Übertragungsperiode (z. B. P1) folgt, in der der jeweilige Sendebeginn bei der untergeordneten Einrichtung liegt, daß die von der untergeordneten Einrichtung kommenden Nachrichtensignalblöcke (NBT) im Regenerator (RG) vor ihrer Weitergabe zur übergeordneten Einrichtung hin solange verzögert werden, bis hier die Weitersendung eines von der übergeordneten Einrichtung herkommenden Nachrichtensignalblocks (NGV) beendet ist, jedoch nur solange, daß sie vor Sendebeginn oei der übergeordneten Einrichtung dort ankommen.

2. Verfahren nach Anspruch 1, dadurch gekennzeichnet, daß, sofern die Dämpfungsverhältnisse auf der Zweidrahtübertragungsleitung (a, b) es erfordern, im Regenerator außerdem eine amplitudenmäßige Regeneration der Bits der Nachrichtensignalblöcke (NBV, NBT) beider Übertragungsrichtungen vorgenommen wird.

3. Verfahren nach Anspruch 1 oder 2, dadurch gekennzeichnet, daß im Regenerator (RG) zur Trennung und Wiedervereinigung der Nachrichtensignalblöcke der beiden Übertragungsrichtungen vor und nach ihrer unterschiedlichen Behandlung bei der Weitergabe Zeitweichen (ZWT, ZWV) und zur amplitudenmäßigen Regeneration der Nachrichtensignalbits Sende-/ Empfangseinrichtungen (S/E) derselben Art eingesetzt werden, wie sie bei der übergeordneten und bei der untergeordneten Einrichtung am Übergang zur Zweidrahtübertragungsleitung (a, b) Verwendung finden.

**Claims**

1. Method for the four-wire transmission of digital information signals between a superordinate device — in particular a digital exchange — and a subordinate device — in particular a digital subscriber station — on a two-wire transmission line in the form of message signal blocks which comprise at least one message signal word, bits which serve for signalling purposes and bits which serve for synchronisation in the transmission direction from the superordinate device to the subordinate device and which, possibly with a transmission pause, are transmitted from the subordinate device following the reception of the message signal blocks arriving from the superordinate device, characterised in that the meassage signal blocks pass through a regenerator (RG) which is interposed into the two-wire line (a, b) at a point at which the message signal blocks (NBT) emanating from the subordinate device have arrived at the latest at the end of the transit time ($\tau$) of the message signal blocks (NBV) emanating from the superordinate device to this points following the start of transmission in the superordinate device which took place in the transmission period (e. g. P2) which follows the transmission period (e. g. P1) in which the start of transmission takes place in the subordinate device, that the message signal blocks (NBT) emanating from the subordinate device are delayed in the regenerator (RG) prior to being forwarded to the superordinate device until the terminantion therein of the onward transmission of a message signal block (NGV) emanating from the superordinate device, but only for such time as they arrive there before the start of transmission in the superordinate device.

2. Method as claimed in claim 1, characterised in that if the attenuation conditions on the two-wire transmission line (a, b) so require, an amplitude regeneration of the bits of the message signal blocks (NBV, NBT) of the two transmission direction is additionally carried out in the regenerator.

3. Method as claimed in claim 1 or 2, characterised in that the regenerator (RG) employs time switches (ZWT, ZWV) for the separation and recombination of the message signal blocks of the two transmission directions before and following their different treatment in respect of onward transmission, and for the amplitude regeneration of the message signal bits it employs transmitting/receiving devices (S/E) there being of the same Type as are used in the case of the superordinate an the subordinate device at the junction with the two-wire transmission line (a, b).

**Revendications**

1. Procédé pour la transmission à quatre fils de signaux d'information numériques entre un dispositif prioritaire, notamment un central téléphonique numérique, et un dispositif subordonné, notamment un poste d'abonné numérique, sur une ligne de transmission bifilaire, sous forme de blocs de signaux d'information qui comprennent au moins un mot de signal d'information, des bits servant à la signalisation et des bits servant à la synchronisation dans le sens de transmission allant du dispositif prioritaire au dispositif subordonné, et qui sont respectivement envoyés par le dispositif subordonné après réception des blocs de signaux d'information provenant du dispositiv prioritaire, éventuellement après respect d'une pause d'émission, caractérisé par le fait que les blocs de signaux d'information traversent un régénérateur (RG) qui est inséré dans la ligne bifilaire (a, b) en un endroit au niveau duquel les blocs de signaux d'information (NBT) qui proviennent du dispositif subordonné sont arrivés le plus tard, à la fin du temps de propagation ($\tau$) jusqu'à cet endroit des blocs de signaux d'information (NBV) émis par le dispositif prioritaire, après le début d'émission dans le dispositif prioritaire, qui se trouve dans la période de transmission (par ex. P2) qui suit la période de transmission (par ex. P1) où se trouve le début d'émission respectif dans le dispositif subordonné, que les blocs de signaux d'information (NBT) provenant du dispositif subordonné sont retardés dans le régénérateur (RG) avant leur retransmission en direction du dispositif prioritaire jusqu'à ce qu'ici la ré-émission d'un bloc de signaux d'information (NGV) provenant du dispositif prioritaire soit terminée, mais seulement tant qu'ils y arrivent abant le début d'émission dans le dispositif prioritaire.

2. Procédé suivant la revendication 1, caractérisé par le fait que, dans la mesure où les conditions d'affaiblissement sur la ligne de transmission bifilaire (a, b) le permettent, dans le régénérateur est effectuée en outre une régénération d'amplitude des bits des blocs de signaux d'information (NBV, NBT) des deux sens de transmission.

3. Procédé suivant la revendication 1 ou 2, caractérisé par le fait que dans le régénérateur (RG), pour séparer et réunir de nouveau les blocs de signaux d'information des deux sens de transmission, avant et après leur traitement différent lors de la transmission on utilise des aiguillages temporels (ZWT, ZWV), et pour la régénération d'amplitude des bits des signaux d'information on utilise des dispositifs d'émission/réception (S/E) du même type que ceux qui sont utilisés dans le dispositif prioritaire et dans le dispositif subordonné au niveau de la transition avec la ligne de transmission bifilaire (a, b).

# FIG 1

RG

| a | S/E | ZWT | v1 VZ1 VZ2 v2 | v1 ZWV v2 | S/E | a |
| b | | | | | | b |

# FIG 2

P1 — P2 — P3

V

NBV1   NBV2   NBV3

NBT1

RG

NBV1   NBV2

NBT1

T

τ tp1 τ   tp2   τ